# EUROPEAN PATENT APPLICATION

(11) **EP 4 439 009 A1**
(43) Date of publication of application: **02.10.2024**
(21) Application number: 24151191.4
(22) Date of filing: 10.01.2024
(51) Int. Cl.: G01C 5/06, G01C 23/00, G06F 3/0488, B64D 43/00, G01C 5/00

(54) **ALTIMETER PRESELECT VALUE**

(30) Priority: 27.03.2023 US 202318126572
(71) Applicant: Rockwell Collins, Inc., Cedar Rapids, IA 52498 (US)
(72) Inventor: VILLAMAGNA, Olivia, North Aurora (US); LIUTKUS, Taylor L., Charlotte (US)
(74) Representative: Dehns

(57) **Abstract**

A preselect value (510) is sent to a primary flight display (104a) for confirmation from both pilots (i.e., from the captain and the first officer). The preselect value removes single point failure when updating the barometric altimeter pressure setting (302) in the barometric altimeter (208) from an uplink message from air traffic control. The preselect value is loaded with the barometric altimeter pressure setting from the uplink message. The pilots each swap the preselect value with the active barometric altimeter pressure setting on the primary flight displays. The new active barometric altimeter pressure setting is then pushed to the barometric altimeters both active barometric altimeter pressure settings match.

## Description

### TECHNICAL FIELD

The present invention generally relates to aviation systems, and more specifically to updating barometric pressure in the aviation systems.

### BACKGROUND

Traditional barometric altimetry requires pilot action in the manual transition between barometric settings. The pilot must reach to the instrument panel and physically twist a knob to the desired barometric pressure setting. The pilot action must be timely at to ensure proper barometric altimeter values. Therefore, it would be advantageous to provide a device, system, and method that cures the shortcomings described above.

### SUMMARY

A system is disclosed, in accordance with one or more embodiments of the present disclosure. In some embodiments, the system includes a flight display configured to display a barometric altimeter (BARO) interface, the BARO interface comprising a BARO pressure setting (BAROSET) value, a preselect value, and a swap arrow. In some embodiments, the system includes a computer coupled to the flight display. In some embodiments, the computer comprises a memory maintaining program instructions and one or more processors configured to execute the program instructions. In some embodiments, the program instructions cause the one or more processors to receive a message comprising a barometric pressure setting. In some embodiments, the program instructions cause the one or more processors to update the preselect value with the barometric pressure setting. In some embodiments, the program instructions cause the one or more processors to swap the BAROSET value and the preselect value in response to receiving an input selecting the swap arrow.

A method is disclosed, in accordance with one or more embodiments of the present disclosure. In some embodiments, the method includes receiving a message comprising a barometric pressure setting. In some embodiments, the method includes updating a preselect value with the barometric pressure setting, wherein the preselect value is in a barometric altimeter (BARO) interface displayed on a flight display, wherein the BARO interface comprises a BARO pressure setting (BAROSET) value, the preselect value, and a swap arrow. In some embodiments, the method includes swapping the BAROSET value and the preselect value in response to receiving an input selecting the swap arrow.

### BRIEF DESCRIPTION OF THE DRAWINGS

Implementations of the concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 depicts a cockpit of an aircraft, in accordance with one or more embodiments of the present disclosure.
FIGS. 2A-2B depict a simplified block diagram of a system of an aircraft, in accordance with one or more embodiments of the present disclosure.
FIG. 3 depicts a primary flight display interface, in accordance with one or more embodiments of the present disclosure.
FIG. 4 depicts a controller pilot data link communication (CPDLC) interface, in accordance with one or more embodiments of the present disclosure.
FIGS. 5A-5D depict a barometric altimeter (BARO) interface including a preselect field, in accordance with one or more embodiments of the present disclosure.
FIG. 6 depicts a flow diagram of a method, in accordance with one or more embodiments of the present disclosure.
FIGS. 7A-7B depicts first and second BARO interfaces, in accordance with one or more embodiments of the present disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details are set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Reference will now be made in detail to the subject matter disclosed, which is illustrated in the accompanying drawings. Embodiments of the present disclosure are generally directed to providing secondary confirmation when using controller pilot data link communication (CPDLC) push-to-load for Uplinks Messages (UM) with barometric altimeter pressure setting. The push-to-load helps reduce crew workload and reduces value input errors. The display provides an interface for each pilot to confirm the barometric altimeter pressure setting. Once confirmed by both pilots, the barometric altimeter pressure setting is pushed to the altimeters in the aircraft. A secondary confirmation was needed when using CPDLC push-to-load for the newly added Uplinks Messages (UM). Push-to-load helps reduce crew workload and reduces value input errors. One of the uplink messages was the barometric altimeter pressure setting. The barometric altimeter pressure setting is used by barometric altimeters for determining a height of the aircraft. It is desirable to reduce a single of point of failure in the aircraft stemming from automatically updating the altimeters without pilot confirmation. A method is described for each pilot to confirm the barometric altimeter pressure setting. The barometric altimeter pressure setting may be displayed on a flight display in a preselect field. The pilots then individually transition the pressure setting into the barometric altimeter pressure setting to loaded into the barometric altimeter. Requiring action from both pilots removes the single point failure concern and provides a secondary confirmation for the pilots when using the push-to-load functionality.

U.S. Patent Number 8,633,913, titled "Touch interfaces and controls for aviation displays", filed on January 16, 2013; U.S. Patent Number 9,243,906, titled "Automated barometric pressure setting system and related method", filed on May 16, 2014; U.S. Patent Number 9,470,522, titled "Systems and methods for updating a scale of a barometric altimeter on aircraft", filed on February 28, 2012; U.S. Patent Number 10,591,293, titled "Detecting an incorrect altimeter setting", filed on ; U.S. Patent Number 10,664,142, titled "Aircraft data entry system", filed on May 8, 2018; U.S. Patent Number 10,693,578, titled "Predictive radio tuning systems and methods for aircraft", filed on August 2, 2017; U.S. Patent Number 10,887,255, titled "CPDLC chat system and method", filed on April 2, 2019; U.S. Patent Publication Number 2003/0025719, titled "Method and apparatus for interactively selecting, controlling and displaying parameters for an avionics radio tuning unit", filed on August 8, 1999; are incorporated herein by reference in the entirety.

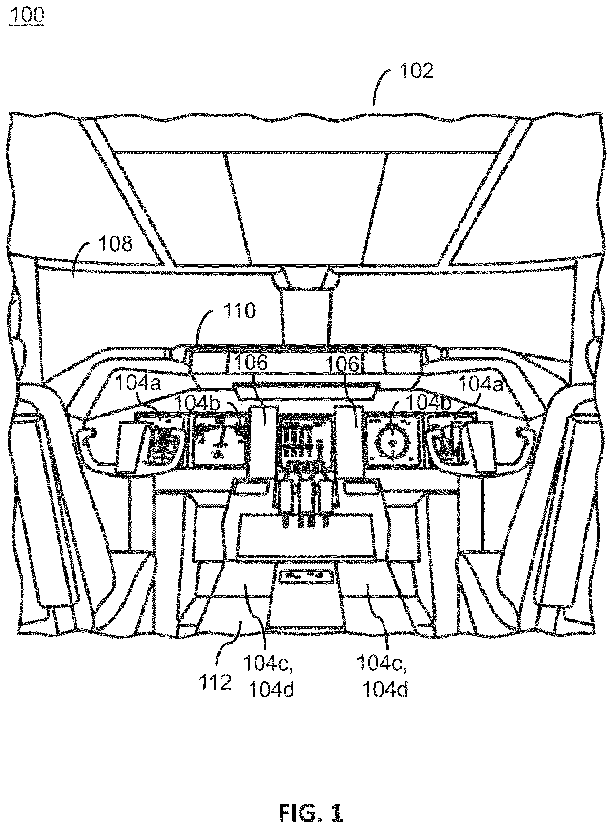

Referring to FIG. 1, a cockpit 102 of an aircraft 100 is shown, according to some embodiments. The cockpit 102 may also be referred to as a control center or a flight deck. The cockpit 102 may include one or more flight displays 104 and one or more user interface ("Ul") elements 106.

The flight displays 104 may be implemented using any of a variety of display technologies, including CRT, LCD, organic LED, dot matrix display, and others. Touchscreens may be implemented on the flight displays 104. Any single or multi-touch technology will support the concepts described herein. It is further contemplated that one or more of the flight displays 104 may not include touchscreen functionality. In this regard, the flight display 104 may include a touchscreen or a non-touch display (i.e., without touchscreen functionality). The flight displays 104 may also be referred to as display units (DUs).

The flight displays 104 may be head-down displays (HDD). HDD may be located on a main instrument panel of the cockpit 102 in front of the pilot and below a windscreen 108 and/or glareshield 110. The flight displays 104 may be used to display various images. The images may provide information to the pilot (e.g., captain, first officer), thereby increasing the pilot's visual range and enhancing their decision-making abilities. The images on the flight displays 104 may be provided in a standard or certified format.

The flight displays 104 may be primary flight displays (PFD 104a), multi-function displays (MFD 104b), auxiliary flight displays (AFD 104c), and so on. Other types and functions of the flight displays 104 are contemplated and will be apparent to those skilled in the art. For instance, the flight displays 104 may also be configured to function as, for example, an engine indicating and crew-alerting system ("EICAS") display. The EICAS display may be used to display critical engine and system status data.

The flight displays 104 may be configured to function as, for example, a primary flight display (PFD 104a). The PFDs 104a may be used to display primary flight information, such as, but not limited to, altitude, airspeed, vertical speed, and navigation and traffic collision avoidance system ("TCAS") advisories. The PFDs 104a may be located directly in front of the pilot (e.g., captain, first officer) and may provide primary flight information, such as, altitude, airspeed, and heading.

The flight displays 104 may also be configured to function as, for example, a multi-function display (MFD 104b). The MFDs 104b may be used to display the primary flight information and/or various other information such as, but not limited to, navigation maps, weather radar, electronic charts, TCAS traffic, aircraft maintenance data and electronic checklists, manuals, procedures, system information, and the like. The MFDs 104b may be located to one side or another of the PFD 104a. The MFDs 104b may also be referred to as navigation ("NAV") displays.

The flight displays 104 may also be configured to function as, for example, an auxiliary flight display (AFD 104c). The cockpit 102 is shown to include a central pedestal 112.One or more of the AFDs 104c may be disposed in the central pedestal 112 of the cockpit 102. The AFDs 104c may include a touchscreen display and/or a hard keyboard display. The AFDs 104c may also be referred to as control display units (CDUs).

In some embodiments, the flight displays 104 may provide an output from an aircraft-based system, a ground-based system, a satellite-based system, or from a system of another aircraft. For example, in one embodiment, the flight displays 104 provide an output from a ground-based weather radar system. In some embodiments, the flight displays 104 provide an output from an aircraft-based weather radar system, LIDAR system, infrared system or other system on the aircraft. For example, the flight displays 104 may include an avionics display, a joint display, an air traffic display, a weather radar map, and a terrain display. The flight displays 104 may include an electronic display or a synthetic vision system ("SVS"). For example, the flight displays 104 may include a display configured to display a two-dimensional ("2-D") image, a three-dimensional ("3-D") perspective image of air traffic data, terrain, and/or weather information, or a fourdimensional ("4-D") display of weather information or forecast information. Other views of air traffic information, terrain, and/or weather information may also be provided (e.g., plan view, horizontal view, and vertical view). The views shown on the flight displays 104 may include monochrome or color graphical representations of the displayed information. Graphical representations of the displayed information may include an indication of altitude of other aircraft, weather conditions, or terrain, or the altitude and/or location of such information relative to the aircraft.

The Ul elements 106 are now described. The Ul elements 106 may include, for example, dials, switches, buttons, touch screens, keyboards, a mouse, joysticks, cursor control devices ("CCDs") or other multi-function key pads certified for use with avionics systems, and so on. The Ul elements 106 may be configured to, for example, allow an aircraft crew member to interact with various avionics applications and perform functions such as data entry, manipulation of navigational maps, and moving among and selecting checklist items. For example, the UI elements 106 may be used to adjust features of the flight displays 104, such as contrast, brightness, width, and length. The UI elements 106 may also (or alternatively) be used by an aircraft crew member to interface with or manipulate the displays of the flight displays 104. The UI elements 106 may additionally be used to acknowledge or dismiss an indicator provided by the flight displays 104.

According to various exemplary embodiments, at least one of the flight displays 104 may be configured to provide a rendered display from the systems and methods of the present disclosure.

Although the aircraft 100 is described as including the AFDs 104c, this is not intended as a limitation of the present disclosure. In some embodiments, the aircraft 100 may include one or more panels 104d. The panels 104d may be disposed in place of the AFDs 104c. For example, the panels 104d may be disposed in the central pedestal 112 of the cockpit 102. The panels 104d may include a display unit and/or one or more UI elements. The UI elements may control the flight displays 104. The panels 104d may allow for controlling the flight displays 104 where the flight displays 104 are non-touch displays. For example, the UI elements may control the PFD 104a, the MFD 104b, and/or the display unit of the panels 104d. In some embodiments, the panels 104d may be referred to as multifunction keyboard panels, cursor control panels, or the like. The panels may include one or more of the UI elements. The UI elements of the panel may include any type of the UI elements for receiving the input. In some embodiments, the UI elements 106 include a keyboard. The keyboard may include a numerical keypad. The numerical keypad may be used to update one or more values, as will be described further herein. In some embodiments, the UI elements of the panels 104d may include a cursor control element. The cursor control element may include a trackball, joystick, touchpad, or the like. The cursor control element may receive an input to position a cursor on the flight displays 104. The cursor may be positioned to hover over one or more elements on the flight displays 104. The cursor control element may also include a cursor select button. The cursor select button may receive an input to select the element on the flight display 104 over which the cursor is hovering.

In some embodiments, receiving an input (e.g., input 312, input 404, input 520, input 522, input 524, and the like) may refer to receiving a direct input on a touchscreen and/or receiving an input of a cursor from a cursor control element. For example, the input may be a direct input from a touchscreen of the PFDs 104a, the MFDs 104b, and/or the AFDs 104c. By way of another example, the input may be an input from the cursor control element of the panels 104d (e.g., the cursor select button of the element over which the cursor is hovering).

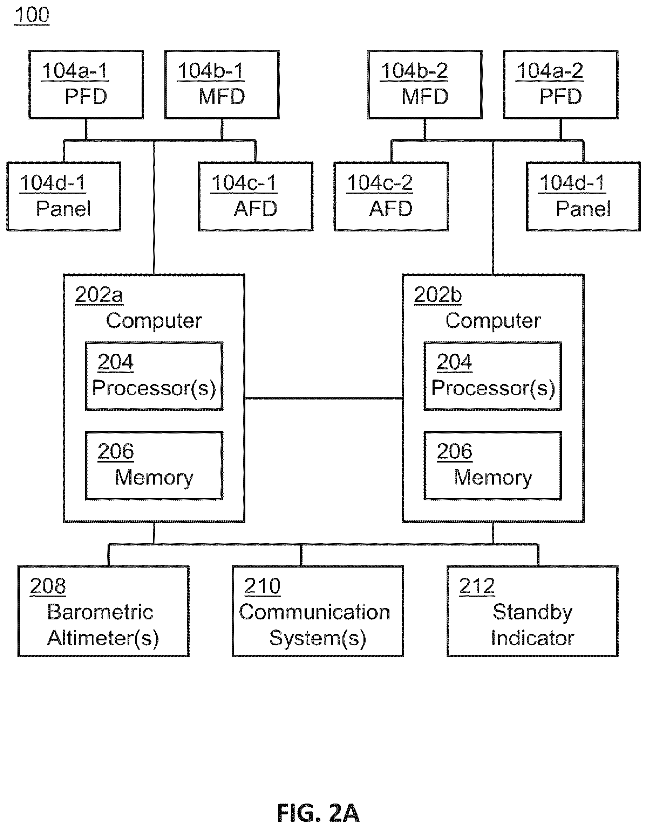

Referring now to FIGS. 2A-2B, a simplified block diagram of a system 200 onboard the aircraft 100 is described, in accordance with one or more embodiments of the present disclosure. The system 200 may include the flight displays 104 (e.g., PFDs 104a, MFDs 104b, AFDs 104c, panels 104d, and the like), one or more computers 202, barometric altimeter 208, communication system 210, a standby indicator 212, and the like. In some embodiments, the system 200 may be referred to as a flight display system (FDS), although this is not intended to be limiting.

In embodiments, the system 200 includes one or more computers 202. The computers 202 may also be referred to as a flight management computer (FMC), a flight management guidance computer (FMGC), and the like. The computers 202 may be coupled to the flight displays 104 (e.g., PFDs 104a, MFDs 104b, AFDs 104c, panels 104d, and the like). For example, the computers 202 may be coupled to the flight displays 104 by one or more buses.

The computers 202 may automate a wide variety of in-flight tasks, reducing the workload on the pilots. One function of the computers 202, for example, is in flight management of a flight plan.

The computers 202 may include one or more processors 204 and memory 206. The processors 204 may be any type of processor. For example, the processors may be a central processing unit, a graphical processing unit, a physics processing unit, an application specific integrated circuit, a microprocessor, a field programmable gate array or any other type of logic device or combination thereof. The memory 206 may include various information. For example, the memory 206 may maintain a navigational database for storing navigational data. The memory 206 may also maintain program instructions executable by the processors 204.

In embodiments, the system 200 includes one or more barometric altimeters 208. The barometric altimeters 208 measures an altitude of the aircraft 100. The altitude of the aircraft 100 is measured based upon an atmospheric pressure experienced by the aircraft 100 relative to a reference pressure. The barometric altimeters 208 may measure the atmospheric pressure around the aircraft in units of hectopascals (hPa), inches of mercury (in-Hg), or the like. The reference pressure may scale the altitude indicated by the barometric altimeter 208. In some embodiments, the aircraft 100 may include two of the barometric altimeters 208.

In embodiments, the barometric altimeters 208 may be scaled. Scaling the barometric altimeters 208 may allow the aircraft 100 to account for differences in atmospheric pressure that occur, for example, because of local weather patterns. After scaling, the barometric altimeters 208 indicates a height of the aircraft above the new reference pressure. The barometric altimeters 208 may be scaled by adjusting or setting the reference pressure. In this regard, the reference pressure of the barometric altimeter 208 may be referred to as a barometric altimeter (BARO) pressure setting (SET), or BAROSET.

In embodiments, the BAROSET may include a standard pressure (STD). For example, STD may be a pressure of 1013.25 hPa or 29.92 in-Hg. STD may be an air pressure at mean sea level in international standard atmosphere (ISA) conditions.

In embodiments, the system 200 includes one or more communication systems 210. For example, the communication system 210 may be a controller pilot data link communication (CPDLC) system. CPDLC is a method by which air traffic controllers (ATC) can exchange textual messages with crew members over a data link system. The air traffic controller is provided with the capability to send messages to the aircraft 100 to issue level assignments, crossing constraints, lateral deviations, route changes and clearances, speed assignments, radio frequency assignments, and respond to various requests for information. The pilot is provided with the capability to respond to messages, to request clearances and information, to report information, and to declare/rescind an emergency. In embodiments, the communication system 210 may receive a CPDLC message. For example, the CPDLC message may be a CPDLC control message. The communication system 210 may then provide the CPDLC message to the computer 202.

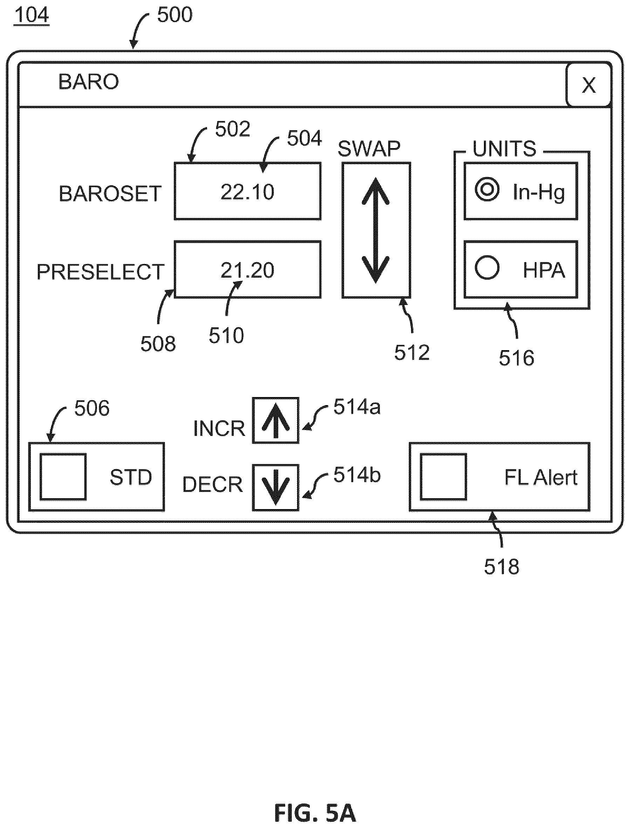

In embodiments, the air traffic controller can transmit a BAROSET to the communication system 210 of the aircraft 100. The communication system 210 may receive the value for the BAROSET of the barometric altimeter 208 and pass the value to the computer 202. The computer 202 may include one or more applications for handling the CPDLC message, such as, but not limited to, a data link communication application (DLCA). The computer 202 may implement one or more methods for updating the BAROSET of the barometric altimeter 208, as discussed in further detail below. For example, the computers 202 may update a preselect value 510 in a preselect field 508. Updating the preselect value 510 from the message may prevent crew error occurring when manually entering the values when requested by ATC. The preselect value 510 may then be swapped from the preselect field 508 to a BAROSET field 502 (see FIGS. 5A-5B). Swapping the preselect value 510 to the BAROSET field 502 may be considered to provide secondary confirmation when using push-to-load functionality. The swapping removes the chance of a single point failure and reduces pilot workload by adding the push-to-load enabled uplink messages. The value in the BAROSET field 502 may then be pushed to the barometric altimeters 208 when both PFDs 104a agree on the BAROSET field 502. The computer 202 may include one or more applications for updating the BAROSET of the barometric altimeter 208, such as, but not limited to, a flight display system application (FDSA).

One or more architectures for the computers 202 are now described. As depicted in FIG. 2A, the system 200 may include a first computer 202a and a second computer 202b. This arrangement may be considered as dual flight management computer architecture. The first computer 202a is depicted as being coupled to a first set of the flight displays 104 including a first PFD 104a-1, a first MFD 104b-1, and either a first AFD 104c-1 or a first panel 104d-1. The first computer 202a may be considered a computer for displays of the captain. In this regard, the first PFD 104a-1, the first MFD 104b-1, the first AFD 104c, and the first panel 104d-1 may also be referred to as a captain PFD, a captain MFD, a captain AFD, and a captain panel, although this is not intended to be limiting. The second computer 202b is depicted as being coupled to a second set of the flight displays 104 including a second PFD 104a-2, a second MFD 104b-2, and either a second AFD 104c-2 or a second panel 104d-2. The first computer 202a may be considered a computer for displays of the first officer. In this regard, the second PFD 104a-2, the MFD 104b-2, the second AFD 104c-2, and the second panel 104d-2 may also be referred to as a first officer PFD, a first officer MFD, a first officer AFD, and a first officer panel, although this is not intended to be limiting. In embodiments, the first PFD 104a-1 and the second PFD104a-2 may each display one or more interfaces or images, such as, but not limited to, a CPDLC interface 400, a barometric altimeter (BARO) interface 500, and the like.

The first computer 202a and the second computer 202b may also be coupled. For example, the first computer 202a and the second computer 202b may be coupled by one or more buses. The buses connecting the first computer 202a and the second computer 202b may be referred to as cross-talk buses, interconnect buses, and the like.

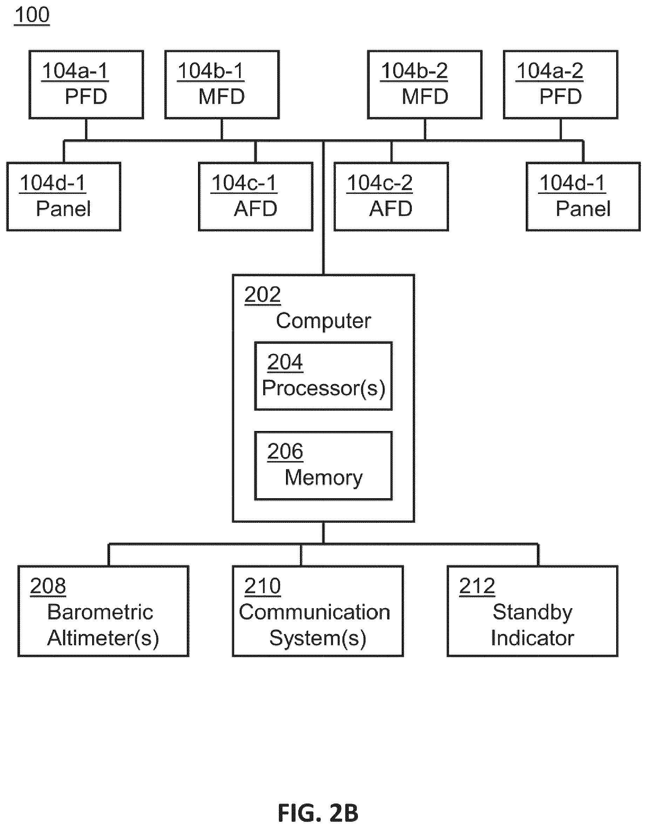

Although the system 200 is described as including the first computer 202a and the second computer 202b, this is not intended as a limitation of the present disclosure. As depicted in FIG. 2B, the system 200 may include a single of the computers 202. It is contemplated that the functionality of the computers 202a, 202b may be implemented by a single of the computers 202. The system 200 including a single of the computers 202 may be considered a single flight management computer architecture. The single of the computers 202 may be coupled to each of the first PFD 104a-1, first MFD 104b-1, first AFD 104c-1, first panel 104d-1, second PFD 104a-2, MFD 104b-2, second AFD 104c-2, and second panel 104d-2.

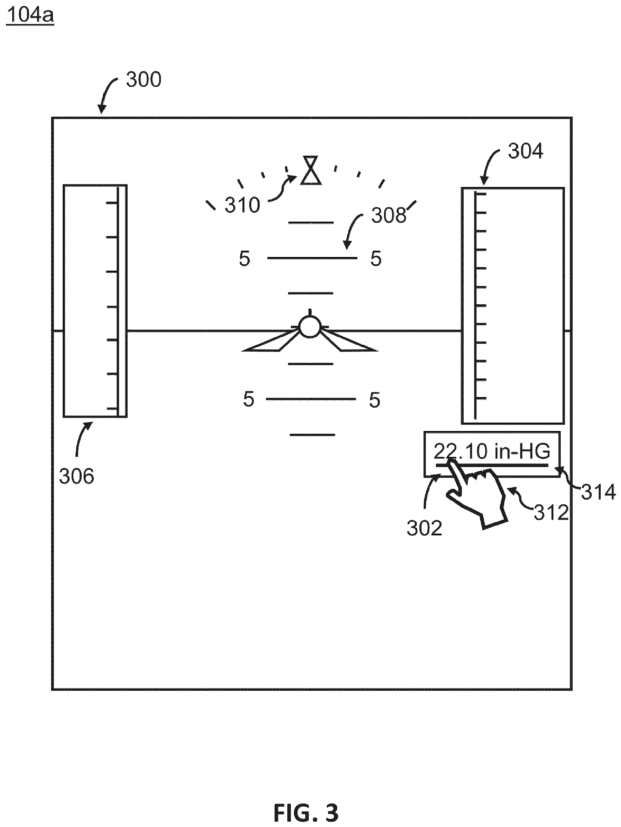

Referring now to FIG. 3, a primary flight display interface 300 displayed on the primary flight display 104a is described, in accordance with one or more embodiments of the present disclosure. The primary flight display interface 300 may include, but is not limited to, a barometric altimeter (BARO) pressure setting (SET) (BAROSET) 302, a barometric altitude indicator 304, airspeed indicator 306, attitude indicator 308, roll pointer 310, and the like.

In embodiments, the barometric altitude indicator 304 may display the barometric altitude of the aircraft 100. The barometric altitude may be determined based on the altitude received from the barometric altimeter 210 scaled by the BAROSET 302. In embodiments, the BAROSET 302 may be displayed below the barometric altitude indicator 304. For example, the BAROSET 302 is depicted as currently being 22.10 in-Hg although this is not intended to be limiting. STD or BARO STD may be displayed as the value for the BAROSET 302 to indicate that the BAROSET 302 is currently standard (i.e., 1013.25 hPa or 29.92 in-Hg).

In embodiments, the BAROSET 302 provides an indication that the BAROSET 302 needs attention. For example, the BAROSET 302 may flash, turn a different color (e.g., turn from cyan to yellow), include an underline 314, or provide some other indication that BAROSET 302 needs attention. The BAROSET 302 may provide the indication that the BAROSET 302 needs attention upon the computer 202 detecting one or more conditions. For example, the BAROSET 302 may provide the indication that the BAROSET 302 needs attention when the computer 202 detects a miss-compare in the BAROSET value 504 between the first PFD 104a-1 and the second PFD 104a-2. The computer 202 may then cause the PFD 104a to update the image with the indication that the BAROSET 302 needs attention. The indication may remain on the interface 300 until the BAROSET values 504 form the first PFD 104a-1 and the second PFD 104a-2 match.

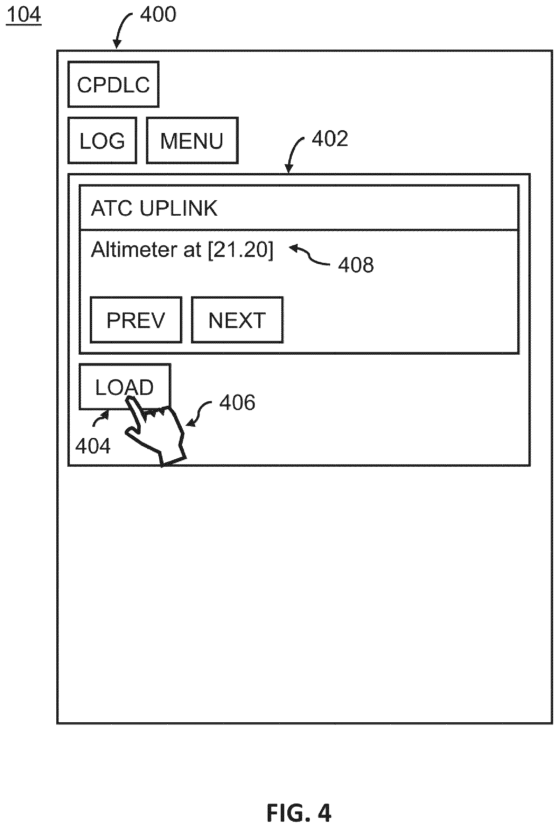

Referring now to FIG. 4, an CPDLC interface 400 displayed on the flight display 104 is described, in accordance with one or more embodiments of the present disclosure. The CPDLC interface 400 may be displayed as one or more images on the flight display 104. The CPDLC interface 400 may be displayed on any of PFDs 104a, the MFDs 104b, and/or the AFDs 104c. The CPDLC interface 400 may refer to an interface including a CPDLC message log 402.

The CPDLC message log 402 may provide one or more messages from an uplink received by the communication system 210 from air traffic control (e.g., ATC uplink). The CPDLC message log 402 may include a message with a barometric pressure setting 408 for the barometric altimeters 208. The flight displays 104 may provide an indication of the barometric pressure setting 408. For example, the figure depicts an ATC uplink with Altimeter at [21.20], although this is not intended to be limiting. The flight displays 104 may also display an indicator to load 404 the barometric pressure setting 408. The flight displays 104 may receive an input 406 to load 404 the barometric pressure setting 408 from the uplink. For instance, the input 406 is depicted as a touch input on the flight display 104. The input 406 may also be an input from the UI elements 106. In this regard, the touchscreen and/or the UI elements 106 may be used to load the barometric pressure setting 408. The barometric pressure setting 408 may be loaded to the computer 202 in response to receiving the input 406. The computer 202 may then perform one or more steps with the barometric pressure setting 408, such as loading a barometer preselect value 510 with the barometric pressure setting 408, as will be described further herein.

Although the new barometer setting is described as loaded in response to the receiving the input 406 to load 404 the barometer setting, this is not intended as a limitation of the present disclosure. In embodiments, the barometric pressure setting 408 is loaded to the computer automatically in response to receiving the ATC uplink with the barometric pressure setting 408. In this regard, pilot configuration to load the barometric pressure setting 408 to the computer 202 may not be required where the barometric pressure setting 408 is loaded in response to receiving the ATC uplink.

Referring now to FIGS. 5A-5D, a barometric altimeter (BARO) interface 500 is described, in accordance with one or more embodiments of the present disclosure. In embodiments, the flight displays 104 may display one or more images including the BARO interface 500. The BARO interface 500 may be provided as an image on any of the flight displays 104, such as, but not limited to, the PFDs 104a, the MFDs 104b, and/or the AFDs 104c.

In embodiments, the BARO interface 500 may be a pop-up dialogue on the flight display 104. For example, the BARO interface 500 may be a pop-up dialogue on the PFD 104a, although this is not intended to be limiting.

In embodiments, the BARO interface 500 may pop-up on the flight display 104 in response to one or more inputs. For example, the BARO interface 500 may pop-up on the flight display 104 in response to an input 312 (see FIG. 3) selecting the BAROSET 302 on the primary flight display interface 300. The input 312 may be a touch input, where the PFD 104a is a touchscreen PFD. By way of another example, the BARO interface 500 may pop-up on the flight display 104 in response to the input 406 selecting to load 404 the barometer setting from the uplink. Alternative methods of opening the BARO interface 500 are also contemplated. For instance, any of the flight displays 104 may include one or more menu options (not depicted) to open the BARO interface 500. By way of another example, the BARO interface 500 may pop-up on the flight display 104 in response to receiving the ATC uplink with the new altimeter setting.

The BARO interface 500 may include one or more data fields. The data fields of the BARO interface may receive an input from the UI elements 106. The data fields of the BARO interface may also receive an input from the flight display 104 where the flight displays 104 are configured as touchscreens. A pilot may manipulate the UI elements 106 to select various data fields. For example, the pilot may move a trackball of the UI elements106 to manipulate a cursor (not shown) displayed on the flight display 104. The position of the cursor on the display 104 may be used to select the data fields. For example, in an exemplary embodiment, when a cursor is manipulated on the display 104 by the pilot to be positioned on top of a particular data field entry location, that data field is registered as being selected. In other exemplary embodiments, a single screen press in a predetermined position on a touchscreen is configured to select a particular data entry field location.

In embodiments, the data fields on the BARO interface 500 may include, but are not limited to, a BAROSET field 502, a standard (STD) field 506, a preselect field 508, a swap arrow 512, user interface (Ul) elements 514 (e.g., increment UI element 514a, decrement UI element 514b), unit fields 516, flight (FL) alert field 518, and the like.

The BAROSET field 502 may be input interface on the flight display 104. The interface 500 may include a BAROSET indicator (e.g., BAROSET) disposed adjacent to the BAROSET field 502. The BAROSET field 502 may display a value. For example, the BAROSET field 502 may display a BAROSET value 504. The BAROSET value 504 may be the active barometric altimeter setting currently set by the flight display 104. In some embodiments, the BAROSET value 504 may not be pushed to the barometric altimeters 208 until the BAROSET value 504 on both the PFDs 104a are the same. For example, the processors 204 of the computer 202 may detect a miss-compare between the BAROSET value 504 on both the PFDs 104a and prevent the BAROSET value 504 from being pushed until the values match (e.g., no miss-compare). The processors 204 of the computer 202 may push the BAROSET value 504 to the barometric altimeters 208 when the BAROSET value 504 on both the PFDs 104a match.

In embodiments, the BAROSET value 504 may be updated by the UI elements 106 (e.g., by a BARO knob). The BARO knob may be used to manually tune the least significant digit of the BAROSET value 504. In embodiments, the BAROSET value 504 may be updated by a numerical keypad input. The numerical keypad input may be from the touchscreen (i.e., soft numerical keypad) and/or from the UI elements (i.e., hard numerical keypad). For instance, the soft numerical keypad may pop-up on the interface in response to selecting the BAROSET field 502 on the BARO interface 500. By way of another instance, the soft numerical keypad may pop-up on the AFD 104c in response to selecting the BAROSET field 502 on the BARO interface 500. By way of another instance, the hard numerical keypad may be disposed on the panels 104d. The AFD 104c and/or panel 104d may be relatively easier for the pilot to reach as compared to the PFD 104a. In embodiments, the BAROSET value 504 may be updated in response to the flight displays 104 receiving an input selecting the STD field 506. The handling of the STD field 506 is described further herein. In embodiments, the BAROSET value 504 may be updated in response to receiving an input selecting the swap arrow 512. The swap arrow 512 is described further herein. Much of the present disclosure is directed to the swap arrow 512 for updating the BAROSET value 504 from the preselect value 510, although this is not intended to be limiting to other methods of updating the BAROSET value 504.

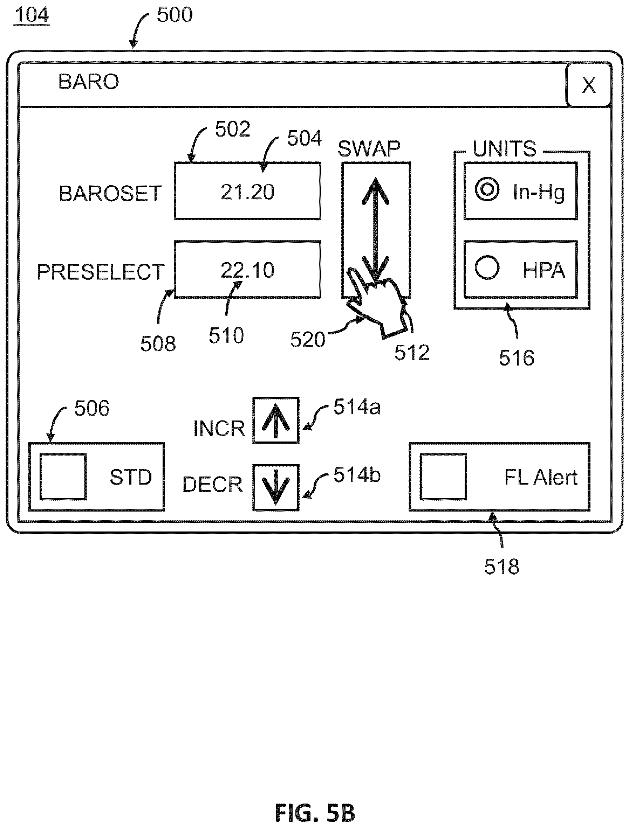

The preselect field 508 is now described. The interface 500 may include a preselect indicator (e.g., PRESELECT) disposed adjacent to the preselect field 508. The preselect field 508 may be an input interface on the flight display 104. The preselect field 508 may display a value. For example, the preselect field 508 may display a preselect value 510. The preselect value 510 may be the standby barometric altimeter setting. The preselect value 510 is not currently active but may be immediately put into use as the current BAROSET value 504. The preselect value 510 is not pushed directly to the barometric altimeters 208. Instead, the preselect value 510 may be swapped to the BAROSET field 502. The preselect value 510 may be swapped to the BAROSET field 502 in response to the flight display 104 receiving an input 520 selecting the swap arrow 512 (see FIG. 5B). Similarly, the BAROSET value 504 may be swapped to the preselect field 508 in response to the flight display 104 receiving an input 520 selecting the swap arrow 512. In this regard, the BAROSET value 504 and the preselect field 508 may be swapped. For example, FIG. 5A depicts the BAROSET value 504 being 22.10 in-Hg and the preselect value 510 being 21.20 in-Hg. FIG. 5B further depicts the BAROSET value 504 being 21.20 in-Hg and the preselect value 510 being 22.10 in-Hg. The values provided in these examples are not intended to be limiting and are merely illustrative of swapping.

In embodiments, the preselect value 510 may be loaded. The preselect value 510 may be loaded without the pilot manually entering the preselect value 510. In embodiments, the preselect value 510 may be loaded from a datalink. For example, the preselect value 510 may be loaded from the Controller pilot data link communications (CPDLC) message. In this regard, the communication system 210 the CPDLC message from the air traffic controller (ATC). The computer 202 then receives the CPDLC message from the communication system 210. The computer 202 may then load the preselect value 510 in response to the input 406 or automatically load the preselect value 510 in response to receiving the CPDLC message. Notably, the setting from the data link may be loaded to the preselect value 510 but not loaded into the BAROSET value 504. It may be desirable to not directly change the BAROSET value 504 due to safety concerns.

Although the preselect value 510 is described as loaded from a CPDLC message, this is not intended as a limitation on the present disclosure. In embodiments, the preselect value 510 may be updated by the UI elements 106 (e.g., by the UI elements 514). The UI elements 514 may be used to manually tune the least significant digit of the preselect value 510. For example, the increment UI element 514a may increment the least significant digit. By way of another example, the decrement UI element 514b may decrement the least significant digit. In embodiments, the preselect value 510 may be updated by a numerical keypad input. The numerical keypad input may be from the touchscreen (i.e., soft numerical keypad) and/or from the UI elements (i.e., hard numerical keypad). For instance, the soft numerical keypad may pop-up on the interface in response to selecting the preselect field 508 on the BARO interface 500. By way of another instance, the soft numerical keypad may pop-up on the AFD 104c in response to selecting the BAROSET field 502 on the BARO interface 500. In embodiments, the preselect value 510 may be updated in response to the flight displays 104 receiving an input selecting the STD field 506. The handling of the STD field 506 is described further herein. In embodiments, the preselect value 510 may be updated in response to the flight displays 104 receiving an input selecting the swap arrow 512.

The swap arrow 512 may also be referred to as a swap button. The swap arrow 512 may be disposed adjacent to the BAROSET field 502 and the preselect field 508 (e.g., in a side-by-side configuration).

The STD field 506 is now described. In embodiments, the BARO interface 500 includes the STD field 506. The STD field 506 may include a graphical widget, such as, but not limited to, a checkbox, a radio button, and the like. As depicted, the STD field 506 may include a checkbox, although this is not intended to be limiting.

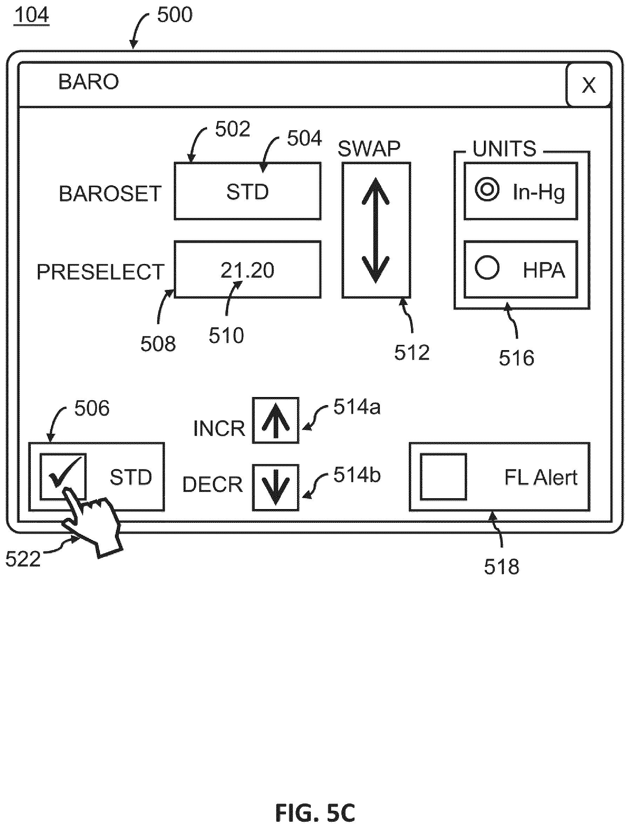

In embodiments, the BAROSET field 502 and the preselect field 508 may be updated in response to receiving an input 522 selecting the STD field 506. The BAROSET value 504 in the BAROSET field 502 may be moved to the preselect value 510 in the preselect field 508. The BAROSET value 504 in the BAROSET field 502 may then be set to STD or 29.92 in-Hg in response to the input 522 selecting the STD field 506. For example, FIG. 5B depicts the BAROSET value 504 being 21.20 in-Hg and the preselect value 510 being 22.10 in-Hg. FIG. 5C further depicts the BAROSET value 504 of 21.20 in-Hg moved to the preselect value 510 and the BAROSET value 504 set to STD. The values provided in these examples are not intended to be limiting and are merely illustrative.

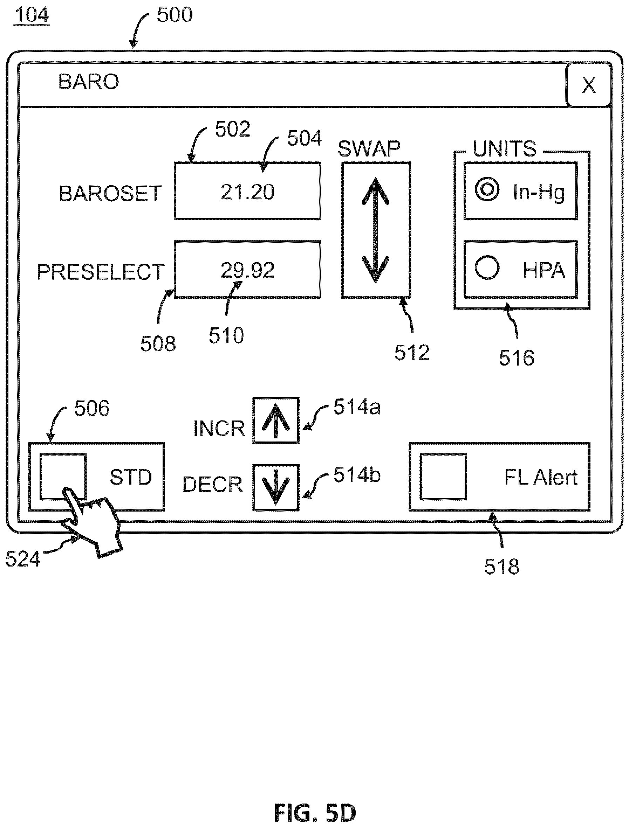

In embodiments, the BAROSET field 502 and the preselect field 508 may be updated in response to receiving an input 524 unselecting the STD field 506. The BAROSET value 504 in the BAROSET field 502 may be swapped with the preselect value 510 in the preselect field 508. The numerical indicator of STD may be changed to the numbered value for STD (e.g., 29.92). For example, FIG. 5C depicts the BAROSET value 504 being STD and the preselect value 510 being 21.20 in-Hg. FIG. 5D further depicts the BAROSET value 504 and the preselect value 510 swapped, such that the BAROSET value 504 is 21.20 and the preselect value 510 is 29.92. The values provided in these examples are not intended to be limiting and are merely illustrative.

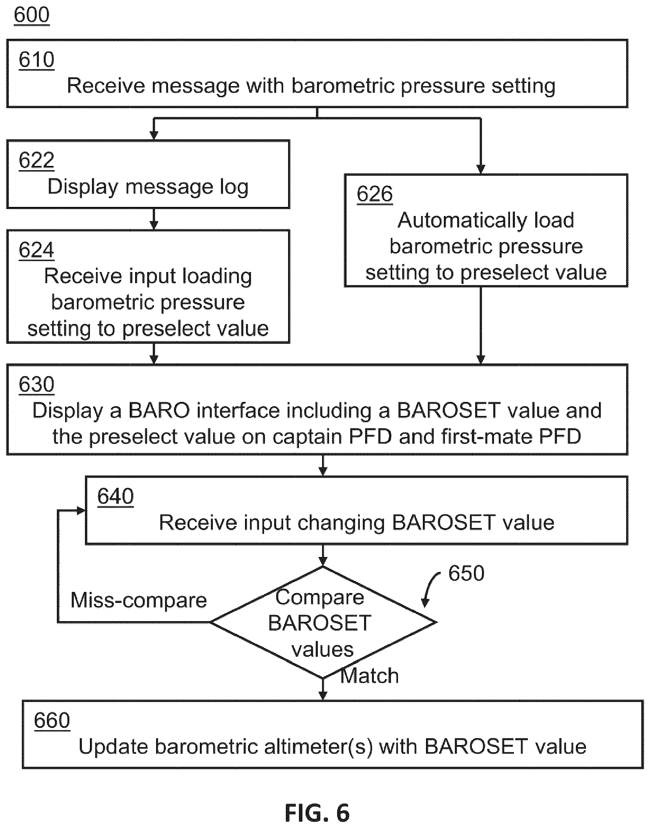

Referring now to FIG. 6, a method 600 is described in accordance with one or more embodiments of the present disclosure. The embodiments and the enabling technology described previously herein in the context of the aircraft 100 and the system 200 should be interpreted to extend to the method 600. For example, one or more steps of the method 600 may be implemented by the computer 202. It is further contemplated that the method 600 is not limited to the aircraft 100 and the system 200.

In a step 610, a message is received with the barometric pressure setting 408. The message may be the CPDLC message. The message may be received by the computer 202 from the communication system 210.

In a step 622, the CPDLC message log 402 is displayed. The CPDLC message log 402 is displayed in response to receiving the message with the barometric pressure setting 408. The computer 202 may cause the flight display 104 to display the CPDLC interface 400 including the message log 402. The processors 204 may execute program instructions causing the cause the flight display 104 to display the CPDLC interface 400 including the message log 402.

In a step 624, the input 406 of loading 404 the barometric pressure setting 408 to the preselect value 510. The computer 202 may receive the input 406. The computer 202 may receive the input 406 from one or more of the flight displays 104 and/or the UI elements 106. The computer 202 may then load the barometric pressure setting 408 to the preselect value 510. The step 624 then proceeds to a step 630.

Although the method 600 is described as including the steps 622 and 624, this is not intended to be limiting. The method 600 may alternatively or additionally include a step 626. In the step 626, the computer 202 may automatically load the barometric pressure setting 408 to the preselect value 510. The computer 202 may automatically load the barometric pressure setting 408 to the preselect value 510 in response to receiving the CPDLC message. The step 626 then proceeds to a step 630.

In the step 630, the BARO interface 500 is displayed. The BARO interface 500 is displayed including the BAROSET value 504 and the preselect value 510. The BARO interface 500 is displayed on one or more of the flight displays 104, such as the first PFD 104a-1 (e.g., captain PFD) and the second PFD 104a-2 (e.g., first officer PFD). Notably, the preselect value 510 is updated with the barometric pressure setting 408 from the CPDLC message.

In a step 640, an input is received changing the BAROSET value 504. In some embodiments, the computer 202 receives the input. The computer 202 may receive the input from various user interfaces. The input may be any of the previously described inputs which change the BAROSET value 504. For example, the input changing the BAROSET value 504 may be an input to manually change the BAROSET value 504. The manual change may an input from the UI elements 106 (BAROSET knob, numerical keypad etc.), an input from a soft numerical keypad on the flight display 104, and the like. By way of another example, the input changing the BAROSET value 504 may be the input 520 selecting the swap arrow 512. By way of another example, the input changing the BAROSET value 504 may be the input 522 selecting the STD field 506. By way of another example, the input changing the BAROSET value 504 may be the input 524 unselecting the STD field 506.

In a step 650, the BAROSET values 504 from the first PFD 104a-1 and the second PFD 104a-2 are compared. The computer 202 may compare the BAROSET values 504 from the first PFD 104a-1 and the second PFD 104a-2. The computer may determine whether the BAROSET values 504 match or if there is a miss-compare based on the comparison. The step 650 may proceed to the step 640 upon detecting the miss-compare. In this regard, the computer 202 may not update the barometric altimeters 208 when the miss-compare is detected. The step 650 may proceed to the step 660 upon detecting the match.

In some embodiments, the step 650 may also include comparing the BAROSET value 504 from the standby indicator 212. In this regard, both pilots must update the BAROSET value 504 from the PFD 104a and one of the pilots must update the BAROSET value 504 on the standby indicator 212.

In the step 660, the barometric altimeters 208 are updated with the BAROSET value. The computer 202 may update the barometric altimeters 208 are updated with the BAROSET value by communicating the BAROSET value to the barometric altimeters 208 over one or more interfaces or buses.

It is contemplated that the steps in the method 600 of loading the barometric pressure setting 408 to the preselect value 510 may decrease pilot workload. The pilot workload may be decreased by saving time when updating the BAROSET value 504 in response to receiving the CPDLC message. For example, the workflow of the pilot may include pressing load 404 on the CPDLC message log 402 and pressing the swap arrow 512. In this regard, the pilot does not need to manually update the BAROSET value 504 from the UI elements 106 (BAROSET knob, numerical keypad etc.) or from the soft numerical keypad on the flight display 104.

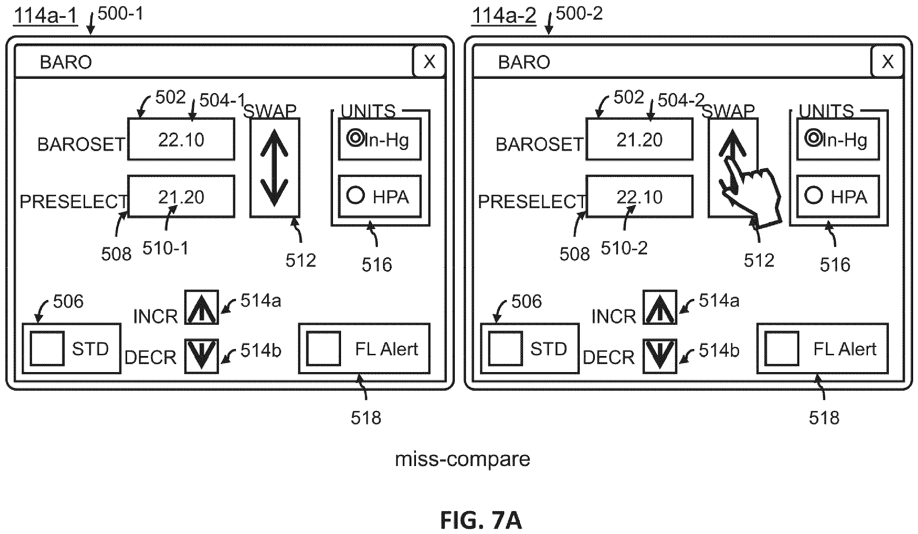

Referring now to FIGS. 7A-7B, the first PFD 104a-1 and the second PFD 104a-2 are described. In embodiments, the first PFD 104a-1 and the second PFD 104a-2 may separately display the interfaces 500. The first PFD 104a-1 may display a first BARO interface 500-1 and the second PFD 104a-2 may display a second BARO interface 500-2. The first BARO interface 500-1 on the first PFD 104a-1 may include different values than the second BARO interface 500-2 on the second PFD 104a-2. The different values may lead to a miss-compare. For example, the first BARO interface 500-1 may include a first BAROSET value 504-1 and a first PRESELECT value 510-1. By way of another example, the second BARO interface 500-2 may include a second BAROSET value 504-1 and a second PRESELECT value 510-2.

The first BAROSET value 504-1 and the second BAROSET value 504-2 may not match, such that there is a miss-compare. For example, FIG. 7A depicts a miss-compare. As depicted, the first BAROSET value 504-1 is 22.10 in-Hg and the second BAROSET value 504-2 is 21.20 in-Hg. In this example, the first-officer has pressed the swap arrow 512 and the captain has not yet pressed the swap arrow 512, for updating to the new value from the CPDLC message log 402.

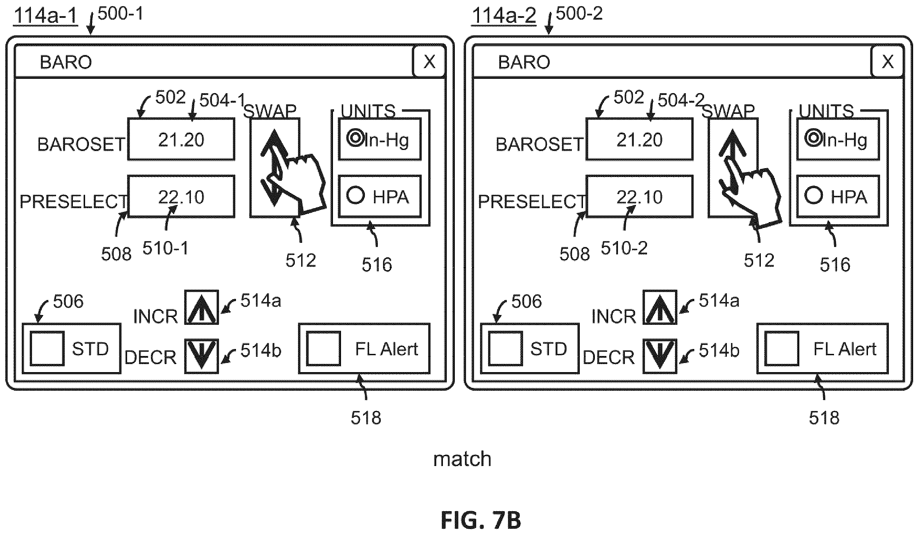

Alternatively, the first BAROSET value 504-1 and the second BAROSET value 504-2 may match. The barometer altimeters 208 may be updated with the BAROSET values 504 upon detecting the match. For example, FIG. 7B depicts a match. As depicted, the first BAROSET value 504-1 and the second BAROSET value 504-2 are both 21.20 in-Hg. In this example, both the captain and the first-officer have pressed the swap arrow 512 for updating the new value from the CPDLC message log 402.

Referring generally again to FIGS. 1-7B. For the purposes of the present disclosure, the term "processor" or "processing element" may be broadly defined to encompass any device having one or more processing or logic elements (e.g., one or more micro-processor devices, one or more application specific integrated circuit (ASIC) devices, one or more field programmable gate arrays (FPGAs), or one or more digital signal processors (DSPs)). In this sense, the one or more processors may include any device configured to execute algorithms and/or instructions (e.g., program instructions stored in memory). Furthermore, the memory may include any storage medium known in the art suitable for storing program instructions executable by the associated processor. For example, the memory medium may include a non-transitory memory medium. By way of another example, the memory medium may include, but is not limited to, a readonly memory (ROM), a random-access memory (RAM), a magnetic or optical memory device (e.g., disk), a solid-state drive and the like. It is further noted that memory medium may be housed in a common controller housing with the processor. In embodiments, the memory medium may be located remotely with respect to the physical location of the processor.

In the present disclosure, the methods, operations, and/or functionality disclosed may be implemented as sets of instructions or software readable by a device. Further, it is understood that the specific order or hierarchy of steps in the methods, operations, and/or functionality disclosed are examples of exemplary approaches. Based upon design preferences, it is understood that the specific order or hierarchy of steps in the methods, operations, and/or functionality can be rearranged while remaining within the scope of the inventive concepts disclosed herein. The accompanying claims may present elements of the various steps in a sample order, and are not necessarily meant to be limited to the specific order or hierarchy presented.

It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

From the above description, the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the broad scope and coverage of the inventive concepts disclosed and claimed herein.

## Claims

1. A system comprising:
a flight display configured to display a barometric altimeter (BARO) interface, the BARO interface comprising a BARO pressure setting (BAROSET) value, a preselect value, and a swap arrow;
a computer coupled to the flight display, the computer comprising:
a memory maintaining program instructions; and
one or more processors configured to execute the program instructions causing the one or more processors to:
receive a message comprising a barometric pressure setting;
update the preselect value with the barometric pressure setting; and
swap the BAROSET value and the preselect value in response to receiving an input selecting the swap arrow.

2. The system of claim 1, wherein the message is a controller pilot data link communication (CPDLC) message.

3. The system of claim 2, comprising a communication system coupled to the computer; wherein the communication system is configured to receive the CPDLC message from a CPDLC uplink and pass the CPDLC message to the computer.

4. The system of claim 2 or 3, wherein the flight display is configured to display a CPDLC message log;
wherein the program instructions cause the one or more processors to:
cause the flight display to display the barometric pressure setting on the CPDLC message log in response to receiving the message comprising the barometric pressure setting; and
update the preselect value with the barometric pressure setting in response to receiving an input to load the barometric pressure setting from the CPDLC message log.

5. The system of any preceding claim, wherein the program instructions cause the one or more processors to update the preselect value with the barometric pressure setting automatically in response to receiving the message comprising the barometric pressure setting.

6. The system of any preceding claim, the BARO interface comprising user interface (Ul) elements configured to manually tune a least significant digit of the preselect value.

7. The system of claim 6, the UI elements comprising an increment UI element and a decrement UI element.

8. The system of any preceding claim, wherein the flight display is a first flight display; wherein the BARO interface is a first BARO interface; wherein the BAROSET value is a first BAROSET value;
comprising a second flight display coupled to the computer; the second flight display configured to display a second BARO interface comprising a second BAROSET value;
wherein the program instructions cause the one or more processors to compare the first BAROSET value with the second BAROSET value.

9. The system of claim 8, wherein the program instructions cause the one or more processors to detect a miss-compare between the first BAROSET value and the second BAROSET value.

10. The system of claim 8 or 9, comprising a barometric altimeter;
wherein the program instructions cause the one or more processors to:
detect a match between the first BAROSET value and the second BAROSET value; and
update the barometric altimeter with the first BAROSET value in response to detecting the match.

11. The system of any preceding claim, wherein the flight display is a primary flight display.

12. The system of any preceding claim, wherein the flight display is one of a touchscreen or a non-touch display.

13. A method comprising:
receiving a message comprising a barometric pressure setting;
updating a preselect value with the barometric pressure setting, wherein the preselect value is in a barometric altimeter (BARO) interface displayed on a flight display, wherein the BARO interface comprises a BARO pressure setting (BAROSET) value, the preselect value, and a swap arrow; and
swapping the BAROSET value and the preselect value in response to receiving an input selecting the swap arrow.

14. The method of claim 13, comprising:
causing the flight display to display the barometric pressure setting on a controller pilot data link communication (CPDLC) message log in response to receiving the message comprising the barometric pressure setting; and
updating the preselect value with the barometric pressure setting in response to receiving an input to load the barometric pressure setting from the CPDLC message log.

15. The method of claim 13 or 14, comprising updating the preselect value with the barometric pressure setting automatically in response to receiving the message comprising the barometric pressure setting.
